# EUROPÄISCHE PATENTSCHRIFT

(11) **EP 0 933 143 B1**
(45) Veröffentlichungstag und Bekanntmachung des Hinweises auf die Patenterteilung: **17.09.2003**
(21) Anmeldenummer: 98124690.3
(22) Anmeldetag: 24.12.1998
(51) Int. Cl.: B07C 3/00, B07C 3/08

(54) **Auslösevorrichtung**
Trigger device
Dispositif de déclenchement

(30) Priorität: 31.01.1998 DE 29801630 U
(43) Veröffentlichungstag der Anmeldung: 04.08.1999
(73) Patentinhaber: FESTO AG & Co, 73734 Esslingen (DE)
(72) Erfinder: Kuhn, Wolfgang, 73733 Esslingen (DE); Steidle, Roland, 73035 Göppingen (DE); Beck, Ulrich, 70794 Filderstadt (DE); Gudzulic, Miro, 82211 Herrsching (DE)
(74) Vertreter: Abel, Martin, Dipl.-Ing.

(56) Entgegenhaltungen:
- EP-A- 0 142 436
- DE-A- 3 439 586
- GB-A- 2 117 341
- US-A- 5 626 236

## Beschreibung

Die Erfindung betrifft eine Auslösevorrichtung zum Auslösen wenigstens einer Funktion an einer oder mehreren entlang einer vorgegebenen Bewegungsbahn bewegten Einrichtungen bei Erreichen wenigstens einer Auslöseposition.

Auslösevorrichtungen dieser Art kommen insbesondere in Briefsortieranlagen zum Einsatz, wo sie dazu verwendet werden, um nach Bestimmungsort sortierte Postvertriebsstücke an vorbestimmten Ausgabepositionen zur weiteren Verwendung auszugeben. Die Sortieranlage verfügt in der Regel über eine Vielzahl von Wagen, die entlang einer Bewegungsbahn verlagert werden und mit den bestimmungsabhängig einsortierten Postvertriebsstücken bestückt sind. Die Auslösevorrichtung verfügt nun über eine Mehrzahl von Auslöseeinheiten, die an vorbestimmten Auslösepositionen angeordnet sind, die mit den gewünschten Ausgabepositionen übereinstimmen. Um einen Wageninhalt an einer vorbestimmten Ausgabeposition auszugeben, wird die zugeordnete Auslöseeinheit rechtzeitig in eine Auslöse-Schaltstellung umgeschaltet, so daß ein Auslöseglied in den Verfahrweg eines Betätigungselementes des betreffenden Wagens ragt und bei dessen Passieren den Ausgabevorgang hervorruft.

Die bisherigen Auslösevorrichtungen (siehe z.B. US- A- 5 626 236, DE-A- 3 439 586 oder GB-A- 2 117 341) sind im Aufbau relativ umständlich und wenig wartungsfreundlich. Im Störungsfall ergeben sich daher unverhältnismäßig lange Stillstandszeiten der zugeordneten Sortieranlage, was den Postvertrieb nachhaltig beeinträchtigt.

Es ist daher die Aufgabe der vorliegenden Erfindung, eine Auslösevorrichtung insbesondere für Sortieranlagen zu schaffen, die über einen übersichtlichen Aufbau verfügt, eine hohe Betriebsgeschwindigkeit ermöglicht und sehr wartungsfreundlich ist.

Gelöst wird diese Aufgabe durch eine Auslösevorrichtung zum Auslösen wenigstens einer Funktion an einer oder mehreren entlang einer vorgegebenen Bewegungsbahn bewegten Einrichtungen bei Erreichen wenigstens einer Auslöseposition, mit einer parallel zu der Bewegungsbahn verlaufend installierten Montageleiste, an der in Längsrichtung verteilt im Bereich der Auslösepositionen mehrere durch elektrische Betätigungssignale zwischen einer unbetätigten Schaltstellung und einer Auslöse-Schaltstellung umschaltbare Auslöseeinheiten montiert sind, die jeweils mit einer Sensoreinrichtung zur Erfassung wenigstens einer der möglichen Schaltstellungen ausgestattet sind, und mit mindestens einer ebenfalls an der Montageleiste montierten Busstation, die über einen seriellen Bus mit einer Steuereinrichtung und über flexible Steuerkabel mit mehreren Auslöseeinheiten verbunden ist, wobei die Busstation einerseits aus für die angeschlossenen Auslöseeinheiten bestimmten seriellen Bussignalen Betätigungssignale erzeugt, die über die Steuerkabel an die betreffenden Auslöseeinheiten ausgegeben werden und andererseits aus über die Steuerkabel von den Auslöseeinheiten eingehenden Sensorsignalen für die Steuereinrichtung bestimmte serielle Bussignale erzeugt.

Auf diese Weise ist mit geringem konstruktivem Aufwand eine sehr flexibel einsetzbare und über einen übersichtlichen Aufbau verfügende Auslösevorrichtung geschaffen. Durch die Steuereinrichtung lassen sich serielle Bussignale erzeugen, die von der mindestens einen Busstation entsprechend der Adressierung zuordnungsrichtig ausgelesen und in einfache Betätigungssignale umgewandelt werden, die über das zugeordnete Steuerkabel der betreffenden Auslöseeinheit zugeführt werden. Auf dem gleichen Wege können Sensorsignale von den Auslöseeinheiten zurückgeführt werden, um eine Rückmeldung über den aktuellen Betätigungszustand zu erhalten. Da sowohl die mindestens eine Busstation wie auch die Auslöseeinheiten gemeinsam an einer Montageleiste angeordnet sind, läßt sich eine problemlose Bestückung der Montageleiste vor der Endinstallation am Einsatzort durchführen, wobei die flexiblen Steuerkabel die Vornahme der einzelnen Anschlüsse sehr erleichtern. Je nach Ausgestaltung der Auslösevorrichtung können an der Montageleiste eine oder vorzugsweise mehrere Busstationen montiert sein, wobei jede Busstation zur Ansteuerung einer Gruppe von Auslöseeinheiten zuständig ist, so daß sich eine inselähnliche Verknüpfung ergibt. Da die einzelnen Bauteile in Längsrichtung entlang der Montageleiste verteilt angeordnet sind, ergibt sich eine sehr übersichtliche Anordnung, die eine gute Zugänglichkeit zu Wartungs- und Reparaturzwecken gewährleistet.

Vorteilhafte Weiterbildungen der Erfindung gehen aus den Unteransprüchen hervor.

Wie schon angedeutet, sind an der Montageleiste zweckmäßigerweise mehrere an einen gemeinsamen seriellen Bus angeschlossene Busstationen montiert, die jeweils mit mehreren Auslöseeinheiten gekoppelt sind. Die Busstationen können dabei in die Reihe von Auslöseeinheiten eingegliedert sein, wobei zweckmäßigerweise jede Busstation auf beiden in Leisten-Längsrichtung weisenden Seiten von einer oder mehreren Auslöseeinheiten flankiert wird.

Zum Anschluß einer jeweiligen Auslöseeinheit verfügen die Busstationen zweckmäßigerweise über eine entsprechende Anzahl von Ausgangs-/Eingangs-Kombinationen, über die die Betätigungssignale ausgegeben und die Sensorsignale eingespeist werden. Es ist besonders vorteilhaft, wenn jede Busstation über vier derartige Ausgangs-/Eingangs-Kombinationen verfügt und dadurch den gleichzeitigen Anschluß von vier Auslöseeinheiten gestattet.

Um eine geordnete Verlegung der Steuerkabel zu ermöglichen und Kollisionen mit in der Nachbarschaft der Montageleiste angeordneten bewegten Bauteilen zu verhindern, verfügt die Montageleiste über mindestens eine und vorzugsweise mehrere in Leisten-Längsrichtung verlaufende Verlegenuten, in denen die einzelnen Steuerkabel auf ihrem Weg zwischen der Busstation und der jeweiligen Auslöseeinheit verlegt sind, so daß sie entlang wenigstens eines Großteils ihrer Länge in einer Verlegenut verlaufen. Die Verlegenuten erstrecken sich zweckmäßigerweise in der mit den Busstationen und den Auslöseeinheiten bestückten Bestückungsfläche der Montageleiste, wobei einzelne Steuerkabel unter einer oder mehreren Auslöseeinheiten hindurchgeführt sein können.

Als besonders vorteilhaft hat sich eine Kontaktierung der Busstationen mit dem seriellen Bus durch Verwendung der sogenannten Durchdringungstechnik herausgestellt, die sich sehr einfach und kontaktsicher handhaben läßt. So verfügt der serielle Bus zweckmäßigerweise über ein in einer ersten Aufnahmenut der Montageleiste verlaufendes flexibles Buskabel, das insbesondere zwei Leiter enthält und das mit einer jeweiligen Busstation dadurch kontaktiert wird, daß die betreffende Busstation über Durchdringungskontakte verfügt, die beim Ansetzen der Busstation an die Montageleiste durch den Isolationsmantel des Buskabels hindurch in die Leiter eindringen oder einschneiden.

Zweckmäßigerweise erfolgt die Spannungsversorgung der Busstationen getrennt von der Übermittlung der Bussignale mit einem eigenen Spannungsversorgungskabel, das zweckmäßigerweise ebenfalls in Durchdringungstechnik kontaktiert wird.

Die Spannungsversorgung der Auslöseeinheiten erfolgt vorzugsweise über die zugeordneten Steuerkabel von der Busstation aus, so daß sich eine separate Spannungsversorgung erübrigt.

Vorzugsweise dienen die Betätigungssignale lediglich zur vorgesteuerten Betätigung der Auslöseeinheiten. Die Hauptbetätigung erfolgt dann zweckmäßigerweise durch Fluidkraft insbesondere pneumatisch, wobei das Betriebsfluid zu sämtlichen Auslöseeinheiten über einen zentralen gemeinsamen Speisekanal zugeführt werden kann, der die Montageleiste in Längsrichtung durchzieht.

Nachfolgend wird die Erfindung anhand der beiliegenden Zeichnung näher erläutert. Es zeigen im einzelnen:
- Fig. 1: eine bevorzugte Bauform der Auslösevorrichtung in schematischer Darstellung mit Blick auf die Bestückungsfläche der Montageleiste entsprechend der in Fig. 2 durch Pfeil IV angedeuteten Blickrichtung,
- Fig. 2: einen Querschnitt durch die Auslösevorrichtung der Fig. 1 gemäß Schnittlinie II-II,
- Fig. 3: einen weiteren Querschnitt durch die Auslösevorrichtung aus Fig. 1 gemäß Schnittlinie III-III und
- Fig. 4: eine Draufsicht auf die in Fig. 2 ersichtliche Auslöseeinheit, teilweise geschnitten, mit Blick gemäß Pfeil IV in Richtung der Bestückungsebene der Montageleiste, die ihrerseits nicht dargestellt ist.

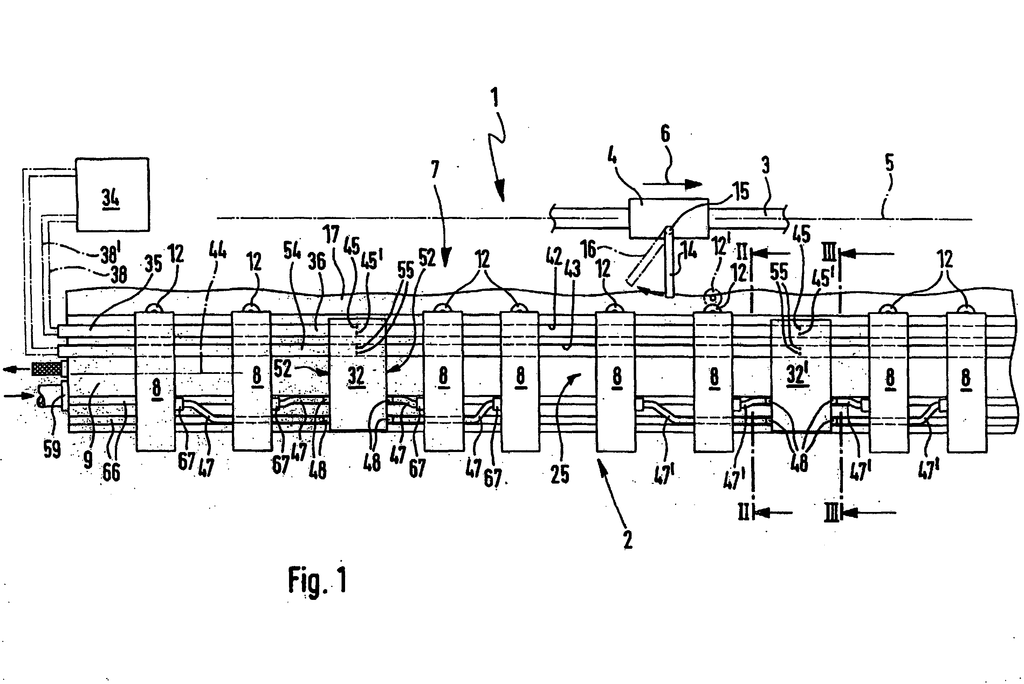

Aus Fig. 1 geht andeutungsweise eine Sortieranlage 1 hervor, die zum Sortieren von Postvertriebsstücken wie Briefe od.dgl. eingesetzt wird. Die in Fig. 1 schematisch angedeutete Auslösevorrichtung 2 bildet hier einen Bestandteil der Sortieranlage 1. Es sei an dieser Stelle darauf hingewiesen, daß die Sortieranlage 1 beliebigen Sortierzwecken dienen kann und nicht auf den Sektor des Postvertriebes festgelegt ist.

Bestandteil der Sortieranlage 1 ist eine schematisch angedeutete Führungseinrichtung 3, an der mehrere von Wagen 4 gebildete Einrichtungen entlang einer strichpunktiert angedeuteten Bewegungsbahn 5 bewegbar geführt angeordnet sind. Eine nicht näher dargestellte Antriebseinrichtung ermöglicht einen Bewegungsantrieb der Wagen 4, so daß sie sich in der durch einen Pfeil markierten Bewegungsrichtung 6 entlang der Bewegungsbahn 5 verlagern.

Jeder der Wagen 4, von denen nur einer dargestellt ist, enthält wenigstens einen Aufnahmeraum für nicht näher dargestellte Gegenstände, vorliegend für Postvertriebsstücke. Diese Gegenstände sollen in einer von der Bewegungsbahn 5 durchlaufenen Ausgabestation 7 der Sortieranlage 1 an einer vorbestimmten Ausgabeposition aus dem Wagen 4 ausgegeben werden. In der Ausgabestation 7 findet sich über die Bewegungsbahn 5 verteilt eine Vielzahl von Ausgabepositionen, die in der Regel vorgegebenen Bestimmungsorten der Postvertriebsstücke entsprechen und beispielsweise nach Postleitzahlen eingeteilt sind. Je nachdem, an welchen Bestimmungsort die Postvertriebsstücke gelangen sollen, werden sie an der zugeordneten Ausgabeposition aus dem Wagen 4 ausgegeben.

Die Ausgabefunktion wird durch die Auslösevorrichtung 2 ausgelöst. Hierzu verfügt die Auslösevorrichtung 2 über eine der Anzahl der Ausgabepositionen entsprechende Anzahl von Auslöseeinheiten 8, die im Bereich der gewünschten Ausgabepositionen angeordnet sind.

Die Auslöseeinheiten 8 sind an einer neben der Bewegungsbahn 5 installierten Montageleiste 9 der Auslösevorrichtung 2 montiert. Die Montageleiste 9 ist ein lineares Bauteil und erstreckt sich parallel zu der Bewegungsbahn 5. Dementsprechend sind die Ausgabeeinheiten 8 mit Abstand aufeinanderfolgend in einer Reihe angeordnet, die zu der Bewegungsbahn 5 parallel ausgerichtet ist.

Jede Auslöseeinheit verfügt über ein Auslöseglied 12, das beim Ausführungsbeispiel von einem um eine Schwenkachse 13 schwenkbar gelagerten Rollenhebel gebildet ist. In der unbetätigten Stellung einer Auslöseeinheit 8 befindet sich deren Auslöseglied 12 außerhalb des Verlagerungsweges eines am jeweiligen Wagen 4 vorgesehenen Betätigungsgliedes 14, das beim Ausführungsbeispiel als um eine Schwenkachse 15 verschwenkbarer Betätigungshebel ausgeführt ist. Das Betätigungsglied 14 kann daher die unbetätigten Auslöseeinheiten 8 ungestört passieren.

Durch elektrische Betätigungssignale können die Auslöseeinheiten 8 unabhängig voneinander aus der unbetätigten Schaltstellung in eine betätigte Schaltstellung umgeschaltet werden, die als Auslöse-Schaltstellung bezeichnet sei. Liegt die Auslöse-Schaltstellung vor, ragt das zugeordnete Auslöseglied 12 gemäß der strichpunktierten Darstellung 12' in den Verlagerungsweg des Betätigungsgliedes 14, das somit bei Erreichen der zugeordneten Aulöseposition in eine strichpunktiert angedeutete Ausgabestellung 16 bewegt wird. Letzteres geschieht beim Ausführungsbeispiel durch Verschwenken um die Schwenkachse 15 und hat zur Folge, daß der Wagen entleert wird.

Die Montageleiste 9 besteht vorzugsweise aus Aluminiummaterial und ist als Strangpreßteil ausgeführt. Sie ist an einer anlagenseitigen Haltestruktur 17 angebracht und in der schon erwähnten Weise ausgerichtet. Die Befestigung kann unter Verwendung einer Befestigungsplatte 18 erfolgen, die einerseits auf beliebige Weise an der Haltestruktur 17 fixiert wird - beispielsweise durch Anschrauben oder Anschweißen - und die andererseits in lösbarer Weise die Montageleiste 9 trägt. Hierzu kann an der Montageleiste eine in Längsrichtung durchgehende Befestigungsnut 19 vorgesehen sein, die unter Verwendung von Nutensteinen 23 und Schrauben 24 eine problemlose Fixierung an der Befestigungsplatte 18 ermöglicht.

Die Montageleiste 9 verfügt an einer Seite über eine in einer Ebene verlaufende Bestückungsfläche 25, die sich über die gesamte Länge der Montageleiste 9 erstreckt und an der die Auslöseeinheiten 8 lösbar montiert sind. Die Montage erfolgt zweckmäßigerweise unter Verwendung wenigstens einer Verankerungsnut 26, die in die Bestückungsfläche 25 eingelassen und wie die Befestigungsnut 19 hinterschnitten ausgeführt ist. In der Verankerungsnut 26 lassen sich Nutensteine 27 anordnen, in die sich Montageschrauben 28 einschrauben lassen, die die jeweilige Auslöseeinheit 8 durchsetzen. Auf diese Weise erübrigt sich an der Montageleiste 9 die Anbringung spezieller Montagebohrungen. Durch die Montageschrauben 28 können die Auslöseeinheiten 8 unverrückbar fest gegen die Bestückungsfläche 25 gespannt werden.

Zur Erleichterung der Übersichtlichkeit ist die Verankerungsnut 26 in Fig. 1 nicht dargestellt.

An der Bestückungsfläche 25 sind des weiteren mehrere blockähnlich gestaltete Busstationen 32 montiert. Ihre Befestigung geschieht zweckmäßigerweise vergleichbar derjenigen der Auslöseeinheiten 8 unter Vermittlung der Verankerungsnut 26. Die erforderlichen Montageschrauben und Nutensteine sind in der Zeichnung nicht abgebildet.

Die, Befestigungsnut 19 und die Verankerungsnut 26 sind zweckmäßigerweise so ausgebildet, daß beim ersten Anschrauben der Befestigungsplatte 18, einer Auslöseeinheit 8 oder einer Busstation 32 der jeweils zugehörige Nutenstein 23, 27 in der betreffenden Nut fixiert wird. Bei einem nachfolgenden Lösen einer Schraube 24, 28, beispielsweise zu Wartungszwecken, verharren somit die Nutensteine ohne zusätzliche mechanische Einwirkung in ihren ursprünglichen Positionen. Diese unverlierbare Fixierung verhindert eine unerwünschte Verlagerung innerhalb der zugeordneten Nut und erleichtert damit das anschließende erneute Anbringen der gelösten Teile oder eventueller Ersatzteile am ursprünglichen Ort.

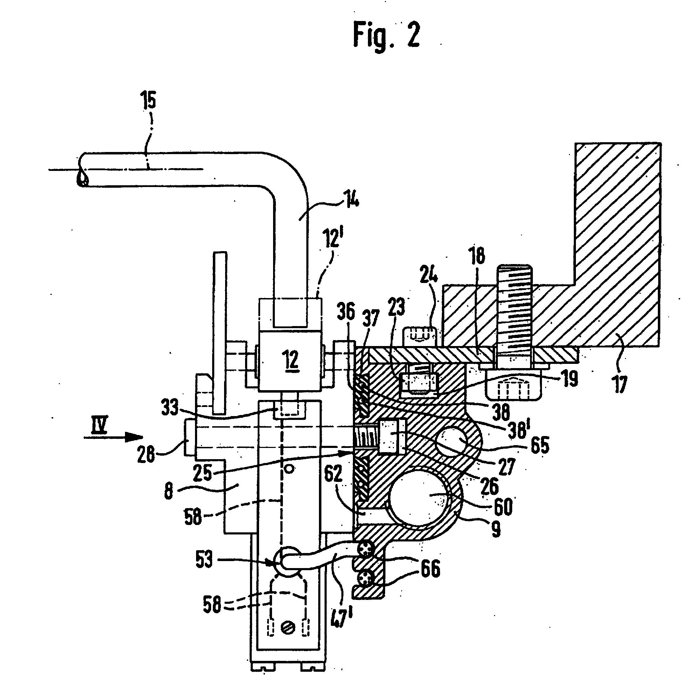

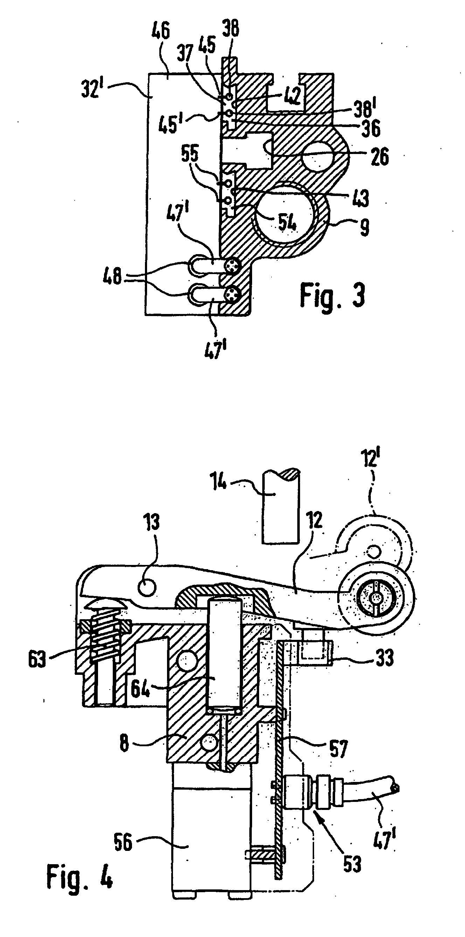

Jede Auslöseeinheit 8 ist mit einer in Fig. 2 und 4 angedeuteten Sensoreinrichtung 33 ausgestattet, die die Erfassung wenigstens einer der möglichen Schaltstellungen des Auslösegliedes 12 ermöglicht. Beim Ausführungsbeispiel wird die Auslöse-Schaltstellung erfaßt. Die Sensoreinrichtung 33 kann beispielweise als Hall-Sensor ausgeführt sein.

Zur Ansteuerung der Auslöseeinheiten 8 ist eine beim Ausführungsbeispiel abseits der Montageleiste 9 angeordnete Steuereinrichtung 34 vorgesehen, die über einen seriellen Bus 35 mit den an der Montageleiste 9 lösbar befestigten Busstationen 32 kommuniziert. Vorzugsweise ist der serielle Bus 35 als sogenannter ASI-Bus ausgeführt und verfügt über ein flexibles Buskabel 36 mit zwei in einem gummielastischen Mantel 37 nebeneinander verlaufenden Leitern 38, 38'.

Die Kontaktierung der Busstationen 32 mit dem gemeinsamen seriellen Bus 35 geschieht vorzugsweise in sogenannter Durchdringungstechnik. Hierzu verläuft das Buskabel 36 im Bereich der Montageleiste 9 in einer ersten Aufnahmenut 42, die in die Bestückungsfläche 25 eingelassen ist und sich in Richtung der strichpunktiert angedeuteten Längsrichtung 44 der Montageleiste 9 erstreckt. Die erste Aufnahmenut 42 ist stirnseitig, d.h. im Bereich der beiden Schmalseiten der nicht über ihre gesamte Länge dargestellten Montageleiste 9 offen, so daß das Buskabel 36 ohne weiteres stirnseitig zugeführt werden kann.

Jede Busstation 32 verfügt über eine zumindest der Anzahl der Leiter 38, 38' entsprechende Anzahl von Kontaktelementen 45, 45', die als Durchdringungselemente und beispielsweise stiftähnlich ausgeführt sind und über die an der Bestückungsfläche 25 anliegende Unterseite des Gehäuses 46 der Busstation 32 vorstehen. Beim Ansetzen der Busstation 32 an die Bestückungsfläche 25 durchdringen die Kontaktelemente 45, 45' den Mantel 37 und gelangen in Kontakt mit den Leitern 38, 38', so daß die gewünschte elektrische Verbindung hergestellt ist.

Die Kontaktierung zwischen dem Buskabel 36 und der externen Steuereinrichtung 34 kann ebenfalls in Durchdringungstechnik oder auf konventionelle Weise erfolgen.

Prinzipiell könnte die Montageleiste 9 mit einer einzigen Busstation ausgestattet sein, die der Ansteuerung sämtlicher vorhandener Auslöseeinheiten 8 dient. Zugunsten einer besseren übersichtlichkeit insbesondere auch hinsichtlich der erforderlichen Kabelverlegungen sind beim Ausführungsbeispiel jedoch mehrere Busstationen 32, 32' vorgesehen, die gemeinsam an den seriellen Bus 35 angeschlossen sind. Jede dieser Busstationen 32, 32' dient zur Ansteuerung mehrerer Auslöseeinheiten 8, wobei sie mit den zugeordneten Auslöseeinheiten 8 jeweils über ein flexibles Steuerkabel. 47, 47' verbunden ist. Es liegt also eine gruppenweise Zuordnung von Auslöseeinheiten 8 zu verschiedenen Busstationen 32, 32' vor.

Um den Verkabelungsaufwand so gering wie möglich zu halten, sind die Busstationen 32, 32' in die Reihe von Auslöseeinheiten 8 an der Montageleiste 9 eingegliedert. Jede Busstation 32, 32' wird an beiden in Leisten-Längsrichtung 44 weisenden Seiten von jeweils einer oder mehreren Auslöseeinheiten 8 flankiert. Beim Ausführungsbeispiel sitzt jede Busstation 32, 32' zwischen zwei mit ihr über Steuerkabel 47, 47' verbundenen Auslöseeinheiten 8, wobei jede Busstation 32, 32' steuerungstechnisch zur Kommunikation mit vier Auslöseeinheiten 8 ausgelegt ist. Jede Busstation 32, 32' ist mit einer nicht näher dargestellten Decodier- und Codiereinheit ausgestattet, die dazu in der Lage ist, serielle Bussignale in parallele Steuersignale umzuwandeln.

Im Betrieb der Auslösevorrichtung lesen die Busstationen 32, 32' diejenigen von der Steuereinrichtung 34 über den seriellen Bus 35 gelieferten seriellen Bussignale aus, die für eine der an die betreffende Busstation 32, 32' angeschlossenen Auslöseeinheiten 8 bestimmt sind. Dies geschieht in an sich bekannter Weise durch geeignete Adressierung. In der Decodier- und Codiereinheit werden aus den seriellen Bussignalen Betätigungssignale erzeugt, die dann von der Busstation 32, 32' über das zugeordnete Steuerkabel 47, 47' an die betreffende Auslöseeinheit 8 ausgegeben bzw. übermittelt werden. Die übertragung des Betätigungssignals erfolgt 1: 1, es findet also durch die Decodier- und Codiereinheit eine Decodierung derart statt, daß nur die angesprochene Auslöseeinheit 8 mit einem Betätigungssignal versorgt wird, während die übrigen angeschlossenen Auslöseeinheiten 8 in diesem Falle kein Signal empfangen.

Wurde eine Auslöseeinheit 8 durch ein Betätigungssignal in die Auslöse-Schaltstellung umgeschaltet, erzeugt die Sensoreinrichtung 33 ein Sensorsignal, das nun seinerseits im 1:1-Format über das angeschlossene Steuerkabel 47, 47' an die zugeordnete Busstation 32, 32' gelangt. Dieses eingehende Sensorsignal wird in der Decodier- und Codiereinheit codiert, um ein serielles Bussignal zu erhalten, das über den seriellen Bus 35 an die Steuereinrichtung 34 übermittelt wird, die somit den vollzogenen Umschaltvorgang verifizieren kann.

Innerhalb der Steuerkabel 47, 47' erfolgt beim Ausführungsbeispiel die Übermittlung der Betätigungssignale und der Sensorsignale über getrennte Leiter, die in dem Steuerkabel 47, 47' zusammengefaßt sind. Für jedes Steuerkabel 47, 47' verfügen die Busstationen 32, 32' über eine Ausgangs-/Eingangs-Anschlußkombination 48 - nachfolgend vereinfacht nurmehr als "Signalanschluß 48" bezeichnet -, der zweckmäßigerweise als Steckanschluß ausgeführt ist und eine lösbare Steckverbindung mit dem zugeordneten Steuerkabel 47, 47' ermöglicht.

Zweckmäßigerweise verfügt eine jeweilige Busstation 32, 32' an beiden in Leisten-Längsrichtung 44 weisenden Seitenflächen 52 über mehrere Signalanschlüsse 48, denen eine entsprechende Anzahl angesteuerter Auslöseeinheiten 8 benachbart ist. So finden sich beim Ausführungsbeispiel an den beiden Seitenflächen 52 der Busstationen 32, 32' jeweils zwei Signalanschlüsse 48, die über Steuerkabel 47, 47' mit zwei auf den gleichen Seiten angeordneten Auslöseeinheiten 8 verbunden sind.

Möglich ist auch die Verbindung zwischen den Steuerkabeln 47, 47' und den Auslöseeinheiten 8 unter Vermittlung von Steckverbindungseinrichtungen 53, wie sie in Fig. 2 und 4 exemplarisch angedeutet sind.

Die Busstationen 32, 32' verfügen zweckmäßigerweise über eine von der übermittlung der Bussignale unabhängige Spannungsversorgung. Beim Ausführungsbeispiel ist dies dadurch realisiert, daß seitlich benachbart zur ersten Aufnahmenut 42 in der Bestückungsfläche 52 eine zweite Aufnahmenut 43 ausgenommen ist, die parallel zur ersten Aufnahmenut 42 über die Länge der Montageleiste 9 verläuft und in die ein flexibles Spannungsversorgungskabel 54 eingelegt ist. Der Aufbau des Spannungsversorgungskabels 54 entspricht beim Ausführungsbeispiel demjenigen des Buskabels 36, und dementsprechend ist bezüglich der Busstationen 32, 32' ebenfalls eine Kontaktierung im Rahmen der weiter oben schon erläuterten Durchdringungstechnik möglich. Die zugehörigen Kontaktelemente 55 sind in Fig. 1 und 3 angedeutet. Beim Ansetzen der Busstationen 32, 32' an die Montageleiste 9 erfolgt somit sowohl die Kontaktierung des seriellen Busses als auch der Spannungsversorgung.

Der Querschnitt des Buskabels 36 und des Spannungsversorgungskabels 54 ist zweckmäßigerweise derart auf den Querschnitt der jeweils zugeordneten Aufnahmenut 42, 43 abgestimmt, daß die Kabel im in die zugeordnete Nut eingelegten Zustand erhaben über die Bestückungsfläche 25 hinausragen. Dies hat zur Folge, daß eine Busstation 32 beim Ansetzen an die Montageleiste 9 mit ihrer der Bestückungsfläche 25 zugewandten Unterseite gegen die Kabel 36, 54 gepreßt wird. Dadurch ergibt sich ein dichtender Berührkontakt zwischen dem elastischen Kabelmantel 37 und dem Gehäuse der Busstation 32 im Umfangsbereich der Kontaktelemente 45, 45'; 55, 55'. Die Kontaktelemente werden somit von Umwelteinflüssen wie Feuchtigkeit oder Staub geschützt, wobei zweckmäßigerweise eine Schutzart von mindestens IP 54 erreicht wird. Die vorerwähnten Medien werden insbesondere an einem Eindringen zwischen die eng benachbarten Kontaktelemente 45, 45' bzw. 55, 55' gehindert, so daß Kurzschlüsse oder sonstige Funktionsstörungen vermieden werden.

Die Auslöseeinheiten 8 verfügen jeweils über eine elektrisch betätigte Betätigungseinheit 56, die beim Ausführungsbeispiel von einem Magnetventil gebildet ist. Die Spannungsversorgung der Betätigungseinheiten 56 erfolgt vorzugsweise ebenfalls über die Steuerkabel 47, 47' ausgehend von der zugeordneten Busstation 32, 32'. Die Steuerkabel 47, 47' sind daher entsprechend mehradrig ausgeführt. Anhand der Fig. 2 und 4 ist erkennbar, daß die elektrische Verknüpfung zwischen der Steckverbindungseinrichtung 53 einerseits und der Sensoreinrichtung 33 sowie der Betätigungseinheit 56 andererseits über eine Leiterplatte 57 an der Auslöseeinheit 8 erfolgen kann. Diese Leiterplatte 57 trägt zum einen die eine Hälfte der Steckverbindungseinrichtung 53 und zum anderen elektrische Leiter 58, die zu den Anschlußkontakten der Sensoreinrichtung 33 und der Betätigungseinheit 56 führen.

Vorzugsweise bildet die Betätigungseinheit 56 einer jeweiligen Auslöseeinheit 8 eine elektrisch betätigte Vorsteuereinheit, die nach Art eines Schaltrelais eine durch Fluidkraft hervorgerufene Hauptbetätigung der Auslöseeinheit 8 hervorruft. Als Betriebsfluid für die Hauptbetätigung der Auslöseeinheiten 8 ist beim Ausführungsbeispiel Druckluft vorgesehen, die an einer stirnseitigen Anschlußstelle 59 in einen die Montageleiste 9 in Längsrichtung durchziehenden Speisekanal 60 eingespeist wird. Von diesem Speisekanal 60 gehen im Bereich der einzelnen Auslöseeinheiten 8 Zweigkanäle 62 ab, die zur Bestückungsfläche 25 ausmünden und auf nicht näher dargestellte Weise mit dem Innern der dort angebrachten Auslöseeinheit 8 kommunizieren. Erhält die Betätigungseinheit 56 ein Betätigungssignal, kann das auf diese Weise eingespeiste Betriebsfluid auf das Auslöseglied 12 einwirken und dieses - beim Ausführungsbeispiel entgegen die Kraft einer Rückstellfeder 63 - in die Auslöse-Schaltstellung verlagern. Die Einwirkung auf das Auslöseglied 12 erfolgt beim Ausführungsbeispiel unter Zwischenschaltung eines Betätigungsstößels 64.

Zum Zurückschalten der Auslöseeinheit 8 in die unbetätigte Schaltstellung ist lediglich die Betätigungseinheit 56 durch Wegnahme des Betätigungssignals zu deaktivieren. Die dabei an der betreffenden Auslöseeinheit 8 anfallende Abluft kann unmittelbar an die Umgebung abgegeben werden oder wird vorzugweise, wie beim Ausführungsbeispiel, über einen zentralen Abluftkanal 65 abgeführt, der im Innern der Montageleiste 9 parallel zum Speisekanal 60 verläuft und in ähnlicher Weise wie dieser über nicht näher dargestellte Zweigkanäle mit den Auslöseeinheiten 8 kommuniziert. Beispielsweise über einen stirnseitig an die Montageleiste 9 angesetzten Schalldämpfer kann die Abluft aus der Montageleiste 9 an die Umgebung abgegeben werden. Es ist jedoch auch eine weitergehende Abführung mittels eines angeschlossenen Abluftschlauches möglich.

Um eine beschädigungssichere Verlegung der Steuerkabel 47, 47' zu ermöglichen, verfügt die Montageleiste 9 über mindestens eine Verlegenut 66, die sich in Leisten-Längsrichtung 44 über die gesamte Länge der Montageleiste 9 erstreckt. Beim Ausführungsbeispiel sind zwei derartige Verlegenuten 66 vorhanden, die parallel zueinander verlaufen und in die Bestückungsfläche 25 eingelassen sind. Sie sind daher wie die beiden Aufnahmenuten 42, 43 zur Bestückungsfläche 25 hin offen und werden von den daran montierten Busstationen 32, 32' und Auslöseeinheiten 8 partiell überdeckt. Die Verlegenuten 66 ermöglichen es, die Steuerkabel 47, 47' über einen Großteil ihrer Länge geschützt in der Montageleiste 9 unterzubringen, wobei sie lediglich an ihren beiden anschlußseitigen Endbereichen aus der zugeordneten Verlegenut 66 herausgeführt sind.

Die Anzahl der Verlegenuten 66 entspricht zweckmäßigerweise der Anzahl der pro Seitenfläche 52 der Busstationen 32, 32' vorgesehenen Signalanschlüsse 48. Dazuhin ist die Anordnung vorzugsweise so getroffen, daß jeweils eine der Verlegenuten 66 einem der Signalanschlüsse 48 rechtwinkelig zur Bestückungsfläche 25 gegenüberliegt. Auch die beim Ausführungsbeispiel von Steckverbindungseinrichtungen 53 definierten Anschlußstellen 67 an den Auslöseeinheiten 8 sind zweckmäßigerweise so plaziert, daß sie oberhalb der Nutenanordnung zu liegen kommen. Dadurch ist ein verhältnismäßig geradliniges Verlegen der Steuerkabel 47, 47' möglich.

Da es sich um in Leisten-Längsrichtung 44 durchgehende Verlegenuten 66 handelt, besteht ferner die aus Fig. 1 ersichtliche Möglichkeit, ein zu einer übernächsten Auslöseeinheit 8 geführtes Steuerkabel 47, 47' unterhalb der der Busstation 32, 32' unmittelbar nächsten Auslöseeinheit 8 ungestört hindurchzuführen.

Zweckmäßigerweise befinden sich die Verlegenuten 66 in der Nachbarschaft eines der längsseitigen Leistenränder der Montageleiste 9. Ihr Querschnitt kann so konturiert sein, daß sich die Steuerkabel 47, 47' einclipsen lassen.

Die Auslösevorrichtung 2 ist in Längsrichtung beliebig erweiterbar und mit einer beliebigen Anzahl von Busstationen und Auslöseeinheiten 8 ausrüstbar. Um sehr große Längen zu realisieren, kann auch eine mehrteilige Montageleiste 9 Verwendung finden, deren einzelne Leistenelemente zweckmäßigerweise aneinander angesetzt werden, so daß sich eine durchgehende Leistenstruktur ergibt.

## Patentansprüche

1. Auslösevorrichtung zum Auslösen wenigstens einer Funktion an einer oder mehreren entlang einer vorgegebenen Bewegungsbahn (5) bewegten Einrichtungen (4) bei Erreichen wenigstens einer Auslöseposition, mit einer parallel zu der Bewegungsbahn (5) verlaufend installierten Montageleiste (9), an der in Längsrichtung (44) verteilt im Bereich der Auslösepositionen mehrere durch elektrische Betätigungssignale zwischen einer unbetätigten Schaltstellung und einer Auslöse-Schaltstellung umschaltbare Auslöseeinheiten (8) montiert sind, die jeweils mit einer Sensoreinrichtung (33) zur Erfassung wenigstens einer der möglichen Schaltstellungen ausgestattet sind, und mit mindestens einer ebenfalls an der Montageleiste (9) montierten Busstation (32, 32'), die über einen seriellen Bus (35) mit einer Steuereinrichtung (34) und über flexible Steuerkabel (47, 47') mit mehreren Auslöseeinheiten (8) verbunden ist, wobei die Busstation (32, 32') einerseits aus für die angeschlossenen Auslöseeinheiten (8) bestimmten seriellen Bussignalen Betätigungssignale erzeugt, die über die Steuerkabel (47, 47') an die betreffenden Auslöseeinheiten (8) ausgegeben werden und andererseits aus über die Steuerkabel (47, 47') von den Auslöseeinheiten (8) eingehenden Sensorsignalen für die Steuereinrichtung (34) bestimmte serielle Bussignale erzeugt.

2. Auslösevorrichtung nach Anspruch 1, **dadurch gekennzeichnet, daß** an der Montageleiste (9) mehrere an einen gemeinsamen seriellen Bus (35) angeschlossene Busstationen (32, 32') montiert sind, die jeweils mit mehreren Auslöseeinheiten (8) verbunden sind.

3. Auslösevorrichtung nach Anspruch 1 oder 2, **dadurch gekennzeichnet, daß** die mindestens eine Busstation (32, 32') in die Reihe von Auslöseeinheiten (8) an der Montageleiste (9) eingegliedert ist.

4. Auslösevorrichtung nach einem der Ansprüche 1 bis 3, **dadurch gekennzeichnet, daß** die mindestens eine Busstation (32, 32') an der Montageleiste (9) auf beiden in Leisten-Längsrichtung (44) weisenden Seiten von jeweils mindestens einer Auslöseeinheit (8) flankiert ist.

5. Auslösevorrichtung nach einem der Ansprüche 1 bis 4, **dadurch gekennzeichnet, daß** jede Busstation (32, 32') über mehrere zum Anschluß jeweils einer Auslöseeinheit (8) dienende Ausgangs-/Eingangs-Anschlußkombinationen (48) verfügt, denen jeweils ein Steuerkabel (47. 47') zugeordnet ist.

6. Auslösevorrichtung nach Anspruch 5, **dadurch gekennzeichnet, daß** die Busstation (32, 32') an ihren beiden in Leisten-Längsrichtung weisenden Seiten mit jeweils mindestens einer Ausgangs-/Eingangs-Anschlußkombination (48) versehen ist.

7. Auslösevorrichtung nach einem der Ansprüche 1 bis 6, **dadurch gekennzeichnet, daß** die Montageleiste (9) über mindestens eine und vorzugsweise mehrere in Leisten-Längsrichtung (44) verlaufende Verlegenuten (66) verfügt, in denen die einzelnen Steuerkabel (47, 47') verlegt sind.

8. Auslösevorrichtung nach Anspruch 7, **dadurch gekennzeichnet, daß** die Verlegenuten (66) in der mit der mindestens einen Busstation (32, 32') und den Auslöseeinheiten (8) ' bestückten Bestückungsfläche (25) der Montageleiste (9) verlaufen, zweckmäßigerweise in der Nachbarschaft eines der längsseitigen Leistenränder.

9. Auslösevorrichtung nach einem der Ansprüche 1 bis 8, **dadurch gekennzeichnet, daß** der serielle Bus (35) über wenigstens ein in einer sich in Leisten-Längsrichtung (44) erstreckenden ersten Aufnahmenut (42) der Montageleiste (9) verlaufendes flexibles Buskabel (36) verfügt, dessen Leiter (38, 38') in Durchdringungstechnik mit der mindestens einen Busstation (32, 32') kontaktiert sind.

10. Auslösevorrichtung nach einem der Ansprüche 1 bis 9, **dadurch gekennzeichnet, daß** mindestens ein in einer sich in Leisten-Längsrichtung (44) erstreckenden zweiten Aufnahmenut (43) der Montageleiste (9) verlaufendes flexibles Spannungsversorgungskabel (54) vorgesehen ist, dessen Leiter in Durchdringungstechnik mit der mindestens einen Busstation (32, 32') kontaktiert sind.

11. Auslösevorrichtung nach einem der Ansprüche 1 bis 10, **dadurch gekennzeichnet, daß** die Spannungsversorgung der Auslöseeinheiten (8) über das jeweils zugeordnete Steuerkabel (47, 47') erfolgt.

12. Auslösevorrichtung nach einem der Ansprüche 1 bis 11, **dadurch gekennzeichnet, daß** der serielle Bus ein ASI-Bus ist.

13. Auslösevorrichtung nach einem der Ansprüche 1 bis 12, **dadurch gekennzeichnet, daß** die Auslöseeinheiten (8) durch die Betätigungssignale elektrisch vorgesteuert sind, wobei die Hauptbetätigung fluidisch und insbesondere pneumatisch erfolgt und das Betätigungsfluid über einen die Montageleiste (9) in Längsrichtung durchziehenden Speisekanal (58) zugeführt wird, der im Bereich der Auslösepositionen von mit den Auslöseeinheiten (8) kommunizierenden Zweigkanälen (62) angezapft ist.

14. Auslösevorrichtung nach einem der Ansprüche 1 bis 13, **dadurch gekennzeichnet, daß** die Montageleiste (9) über wenigstens eine sich in Leisten-Längsrichtung (44) erstreckende Verankerungsnut (27) verfügt, über die die vorhandenen Busstationen (32, 32') und Auslöseeinheiten (8) montiert sind.

15. Auslösevorrichtung nach einem der Ansprüche 1 bis 14, **dadurch gekennzeichnet, daß** sie Bestandteil einer Sortieranlage (1), insbesondere einer Sortieranlage für Postvertriebsstücke wie Briefe od.dgl., ist.

## Claims

1. Tripping device for the activation of one or more functions, at one or more devices (4) moved along a preset movement path (5), on reaching one or more tripping positions, with a mounting strip (9) installed running parallel to the movement path (5) and on which are mounted, distributed in the longitudinal direction (44) in the area of the tripping positions, several tripping units (8) switchable by means of electrical actuating signals between an unactuated switching position and a tripping switch position, and each equipped with a sensor device (33) for detecting one or more of the possible switching positions, and with one or more bus stations (32, 32') similarly mounted on the mounting strip (9) and connected via a serial bus (35) to a control unit (34) and via flexible control cables (47, 47') to several tripping units (8), wherein the bus station (32, 32') on the one hand generates from serial bus signals intended for the connected tripping units (8), actuating signals which are issued over the control cables (47, 47') to the tripping units (8) concerned, and on the other hand generates from sensor signals received via the control cables (47, 47') from the tripping units (8), serial bus signals intended for the control unit (34).

2. Tripping device according to claim 1, **characterised in that** several bus stations (32, 32') connected to a common serial bus (35) are mounted on the mounting strip (9) and are each connected to several tripping units (8).

3. Tripping device according to claim 1 or 2, **characterised in that** the bus station or stations (32, 32') is or are integrated in the series of tripping units (8) on the mounting strip (9).

4. Tripping device according to any of claims 1 to 3, **characterised in that** the bus station or stations (32, 32') are flanked on the mounting strip (9) on both sides by one or more tripping units (8) facing in the strip longitudinal direction (44).

5. Tripping device according to any of claims 1 to 4, **characterised in that** each bus station (32, 32') has several output/input connection combinations (48), each providing for the connection of a tripping unit (8) and each assigned a control cable (47, 47').

6. Tripping device according to claim 5, **characterised in that** the each bus station (32, 32') is provided with one or more output/input connection combinations (48) at its two sides which face in the strip longitudinal direction.

7. Tripping device according to any of claims 1 to 6, **characterised in that** the mounting strip (9) has at least one and preferably several installation slots (66), in which the individual control cables (47, 47') are laid, running in the strip longitudinal direction (44).

8. Tripping device according to claim 7, **characterised in that** the installation slots (66) run in the mounting surface (25) of the mounting strip (9) fitted with the bus station or stations (32, 32') and the tripping units (8), expediently in the vicinity of one of the long-side strip edges.

9. Tripping device according to any of claims 1 to 8, **characterised in that** the serial bus (35) has at least one flexible bus cable (36) running in a first locating slot (42) of the mounting strip (9) extending in the strip longitudinal direction (44), the conductors (38, 38') of which are contacted by penetration by the bus station or stations (32, 32').

10. Tripping device according to any of claims 1 to 9, **characterised in that** at least one flexible voltage supply cable (54) is provided, running in a second locating slot (43) of the mounting strip (9) extending in the strip longitudinal direction (44) and with conductors contacted by the bus station or stations (32, 32') by means of penetration.

11. Tripping device according to any of claims 1 to 10, **characterised in that** the voltage supply of the tripping units (8) is effected via the respectively assigned control cable (47, 47').

12. Tripping device according to any of claims 1 to 11, **characterised in that** the serial bus is an ASI bus.

13. Tripping device according to any of claims 1 to 12, **characterised in that** the tripping units (8) are electrically servo-controlled by the actuating signals, wherein the main actuation is effected by fluidic means and in particular pneumatically, and the actuating fluid is supplied over a feed passage (58) which passes through the mounting strip (9) in the longitudinal direction and is tapped in the area of the tripping positions by branch passages (62) communicating with the tripping units (8).

14. Tripping device according to any of claims 1 to 13, **characterised in that** the mounting strip (9) has one or more anchorage slots (27) extending in the strip longitudinal direction (44), through which the bus stations (32, 32) and tripping units (8) provided are mounted.

15. Tripping device according to any of claims 1 to 14, **characterised in that** it is part of a sorting machine (1), in particular a sorting machine for postal dispatch items such as letters, etc.

## Revendications

1. Dispositif de déclenchement pour déclencher au moins une fonction d'un ou de plusieurs dispositifs (4) déplaçables le long d'une voie de déplacement (5) prédéfinie lorsqu'est atteinte au moins une position de déclenchement, comportant un profilé de montage (9) installé parallèlement à la voie de déplacement (5), sur lequel sont montées, réparties en direction logitudinale (44) dans la zone des positions de déclenchement, plusieurs unités de déclenchement (8) pouvant être commutées par des signaux d'actionnement électriques, entre une position de couplage non actionnée et une position de couplage de déclenchement, qui sont équipées chacune d'un dispositif de détection (33) pour détecter au moins l'une des positions de couplage possibles, et comportant au moins un poste de bus (32, 32') monté également sur le profilé de montage (9), qui est relié par un bus série (35) à un dispositif de commande (34) et, par des câbles de commande flexibles (47, 47'), à plusieurs unités de déclenchement (8), le poste de bus (32, 32') produisant d'une part, à partir de signaux de bus série destinés aux unités de déclenchement (8) raccordées, des signaux d'actionnement qui sont délivrés, à travers les câbles de commande (47, 47'), aux unités de déclenchement (8) concernées et, d'autre part, à partir de signaux des capteurs provenant des unités de déclenchement (8), à travers les câbles de commande (47, 47'), des signaux de bus série destinés au dispositif de commande (34).

2. Dispositif de déclenchement selon la revendication 1, **caractérisé en ce que** sur le profilé de montage (9) sont montés plusieurs postes de bus (32, 32') raccordés à un bus série (35) commun, qui sont reliés chacun à plusieurs unités de déclenchement (8).

3. Dispositif de déclenchement selon la revendication 1 ou 2, **caractérisé en ce que** le ou les postes de bus (32, 32') sont incorporés à la série d'unités de déclenchement (8) sur le profilé de montage (9).

4. Dispositif de déclenchement selon l'une des revendications 1 à 3, **caractérisé en ce que** le ou les postes de bus (32, 32') sur le profilé de montage (9) sont flanqués chacun d'au moins une unité de déclenchement (8), sur les deux côtés dirigés dans le sens de la longueur (44) du profilé.

5. Dispositif de déclenchement selon l'une des revendications 1 à 4, **caractérisé en ce que** chaque poste de bus (32, 32') dispose de plusieurs combinaisons de raccordement de sortie/entrée (48) servant chacune au raccordement d'une unité de déclenchement (8), et à chacune desquelles est affecté un câble de commande (47, 47').

6. Dispositif de déclenchement selon la revendication 5, **caractérisé en ce que** le poste de bus (32, 32') est pourvu sur ses deux côtés dirigés dans le sens de la longueur du profilé, d'au moins une combinaison de raccordement de sortie/entrée (48).

7. Dispositif de déclenchement selon l'une des revendications 1 à 6, **caractérisé en ce que** le profilé de montage (9) dispose d'au moins une et de préférence de plusieurs rainures de pose (66) s'étendant dans le sens de la longueur (44) du profilé, dans lesquelles sont posés les différents câbles de commande (47, 47').

8. Dispositif de déclenchement selon la revendication 7, **caractérisé en ce que** les rainures de pose (66) s'étendent dans la surface d'équipement (25) du profilé de montage (9), équipée d'au moins un poste de bus (32, 32') et des unités de déclenchement (8), avantageusement au voisinage de l'un des bords longitudinaux du profilé.

9. Dispositif de déclenchement selon l'une des revendications 1 à 8, **caractérisé en ce que** le bus série (35) dispose d'au moins un câble de bus flexible (36) s'étendant dans une première rainure de réception (42), s'étendant dans le sens de la longueur (44) du profilé, du profilé de montage (9), dont les conducteurs (38, 38') sont mis en contact, par une technique de perforation, avec le ou les postes de bus (32, 32').

10. Dispositif de déclenchement selon l'une des revendications 1 à 9, **caractérisé en ce qu'**il est prévu au moins un câble d'alimentation flexible (54) s'étendant dans une deuxième rainure de réception (33), s'étendant dans le sens de la longueur (44) du profilé, du profilé de montage (9), dont les conducteurs sont mis en contact, par une technique de perforation, avec le ou les postes de bus (32, 32').

11. Dispositif de déclenchement selon l'une des revendications 1 à 10, **caractérisé en ce que** l'alimentation en tension des unités de déclenchement (8) s'effectue à travers le câble de commande (47, 47') correspondant.

12. Dispositif de déclenchement selon l'une des revendications 1 à 11, **caractérisé en ce que** le bus série est un bus ASI.

13. Dispositif de déclenchement selon l'une des revendications 1 à 12, **caractérisé en ce que** les unités de déclenchement (8) sont précommandées de manière électrique par les signaux d'actionnement, l'actionnement principal s'effectuant de manière fluide en particulier pneumatique, et le fluide d'actionnement étant amené par un canal d'alimentation (58) traversant le profilé de montage (9) dans le sens de sa longueur, duquel canal partent, dans la zone des positions de déclenchement, des canaux de dérivation (62) communiquant avec les unités de déclenchement (8).

14. Dispositif de déclenchement selon l'une des revendications 1 à 13, **caractérisé en ce que** le profilé de montage (9) dispose d'au moins une rainure d'ancrage (27) s'étendant dans le sens de la longueur (44) de la baguette, par laquelle sont montés les postes de bus (32, 32') et les unités de déclenchement (8) présents.

15. Dispositif de déclenchement selon l'une des revendications 1 à 14, **caractérisé en ce qu'**il fait partie intégrante d'une installation de tri (1), en particulier d'une installation de tri pour des objets de courrier tels que lettres ou similaires.
